# EUROPÄISCHE PATENTSCHRIFT

(11) **EP 2 321 099 B1**
(45) Veröffentlichungstag und Bekanntmachung des Hinweises auf die Patenterteilung: **06.11.2013**
(21) Anmeldenummer: 09778465.6
(22) Anmeldetag: 10.09.2009
(51) Int. Cl.: B27B 5/29, B23D 47/02, B23D 45/04

(54) **KAPP- UND GEHRUNGSSÄGE MIT EINER VZW. EINEN SÄGESCHLITZ BEGRENZENDEN EINLAGE**
MITER SAW HAVING AN INSERT WHICH PREFERABLY BORDERS A SAWING SLOT
SCIE PENDULAIRE À ONGLET MUNIE D'UNE GARNITURE DÉLIMITANT DE PRÉFÉRENCE UNE FENTE DE SCIAGE

(30) Priorität: 12.09.2008 DE 102008047064; 12.09.2008 DE 202008012213 U; 12.09.2008 DE 102008047065
(43) Veröffentlichungstag der Anmeldung: 18.05.2011
(73) Patentinhaber: Weusthof, Gerhard, 48480 Schapen (DE)
(72) Erfinder: Weusthof, Gerhard, 48480 Schapen (DE)
(74) Vertreter: Hübsch, Dirk
(86) Internationale Anmeldenummer: PCT/EP2009/006585
(87) Internationale Veröffentlichungsnummer: WO 2010/028835

(56) Entgegenhaltungen:
- DE-U1- 20 114 319
- US-A- 5 159 864

## Beschreibung

Die Erfindung betrifft eine Kapp- und Gehrungssäge mit einem Auflagetisch, mit einem relativ zum Auflagetisch um eine Hochachse drehbaren Drehmittel, mit einem, insbesondere um die Hochachse drehbaren Gehrungsarm, mit einer am Gehrungsarm angeordneten Sägevorrichtung, wobei die Sägevorrichtung oberhalb des Auflagetisches auf- und ab bewegbar, vzw. schwenkbar, angeordnet ist, wobei das Drehmittel eine Drehmittelbasis mit einer Aufnahme und eine in der Aufnahme angeordnete Einlage aufweist, wobei die Einlage vzw. zumindest teilweise einen Sägeschlitz begrenzt. Der Oberbegriff von Anspruch 1 basiert auf der DE 20114319 U1. Aus der US 5 159 864 ist eine Tischkreissäge mit einer höhenverstellbaren Einlage bekannt.

Mit einer Kapp- und Gehrungssäge lassen sich Werkstücke, insbesondere Werkstückstangen, in einem vom rechten Winkel abweichenden Winkel - dem Gehrungswinkel - zuschneiden. Das Werkstück wird dabei auf einen Auflagetisch der Kapp- und Gehrungssäge gelegt. An einem Gehrungsarm ist oberhalb des Auflagetisches eine Sägevorrichtung mit einem rotierbar angeordneten Sägeblatt zum Sägen des Werkstückes angeordnet. Der Gehrungsarm ist vzw. funktional wirksam an einem Drehmittel um eine Hochachse drehbar gelagert. Durch das Drehen des Gehrungsarmes mit dem Drehmittel ist der Gehrungswinkel einstellbar. Ferner ist vzw. der Gehrungsarm um eine Gehrungsachse schwenkbar, wobei sich die Gehrungsachse im wesentlichen senkrecht zur Hochachse, nämlich in einer Werkstückebene bzw. Schnittebene erstreckt. Zwischen dem Gehrungsarm und dem Drehmittel kann dazu ein vzw. feststellbares Schwenkgelenk vorgesehen sein.

Nachdem der Gehrungswinkel eingestellt ist, kann das Werkstück mit der Sägevorrichtung gekappt bzw. durchgesägt werden, wozu die Sägevorrichtung nach unten absenkbar ist. Das Absägen kann insbesondere durch ein Schwenken der Sägevorrichtung um eine Querachse erfolgen. Die Querachse steht dabei im wesentlichen senkrecht zur Gehrungsachse. Die Sägevorrichtung ist vzw. relativ zur Hochachse in Radialrichtung - vzw. parallel zur Gehrungsachse mit einer Gleitführungsvorrichtung verschiebbar ausgestaltet, so dass nachdem die Sägevorrichtung auf die Höhe des Werkstückes abgesenkt ist, das Werkstück durch radiales Verschieben der Sägevorrichtung durchschnitten werden kann.

Aus der DE 20 2005 015 528 U1 ist eine Kappsäge mit einem als Werkstückauflagefläche dienenden Drehmittel bekannt. Die Kappsäge weist dabei einen Auflagetisch auf, wobei in einer Aufnahme des Auflagetisches das Drehmittel drehbar gelagert ist. Das Drehmittel ist hier als drehbar gelagerter Sägetisch ausgebildet. Oberhalb des Sägetisches ist eine Sägevorrichtung mit einem Antriebsmotor und einem Sägeblatt angeordnet. Der drehbare Sägetisch weist einen Sägeschlitz auf, wobei das Sägeblatt in einer Sägestellung in den Sägeschlitz eintauchen kann. Der Sägetisch weist eine Aufnahme auf, in der eine Einlage in Form eines Sägeschlitzeinsatzes angeordnet ist. Der Sägeschlitz wird von dem lösbar in der Aufnahme eingesetzten Sägeschlitzeinsatz begrenzt. An dem Sägeschlitzeinsatz ist im Sägeschlitz ein bogenförmiger Abschnitt ausgebildet, der an den Durchmesser des Sägeblattes angepasst ist, so dass beim Sägen Staub und Späne entlang des bogenförmigen Abschnittes aus dem Sägeschlitz hinaustransportiert werden. Die Einlage in Form des Sägeschlitzeinsatzes ist hier in der Aufnahme kraftschlüssig befestigt. Dies wird durch eine Klemmung im Bereich der Unterseite des Sägeschlitzeinsatzes erreicht.

Die im Stand der Technik bekannte Kapp- und Gehrungssäge ist noch nicht optimal ausgebildet. Die Praxis hat gezeigt, dass bei einer Verdrehung des Sägetisches bzw. des Drehmittels auch das darauf aufliegende Werkstück teilweise verrutschen kann, so dass die Schnittqualität bei der bekannten Kapp- und Gehrungssäge problematisch ist, da aufgrund der sich mitdrehenden relativ großen Fläche des Sägetisches keine sichere Werkstückauflage vorhanden ist. Im Ergebnis sind daher die im Stand der Technik bekannten Kapp- und Gehrungssägen noch nicht optimal ausgebildet.

Der Erfindung liegt daher die Aufgabe zugrunde, die eingangs genannte Kapp- und Gehrungssäge derart auszugestalten und weiterzubilden, dass deren Schnittqualität erhöht ist und eine unsichere Werkstückauflage vermieden ist.

Die zuvor aufgezeigte Aufgabe wird durch eine Kapp- und Gehrungssäge gemäß Anspruch 1 gelöst. Dies hat den Vorteil, dass die Einlage - insbesondere im Bezug zur Höhe des Auflagetisches - einstellbar ist, wodurch die Oberseite der Einlage vzw. fluchtend zum drehfesten Auflagetisch ausgerichtet werden kann. Auf diese Weise können die Einlage und der Auflagetisch zueinander nivelliert werden. Dadurch ist eine sichere Werkstückauflage für das Werkstück einstellbar, wobei der drehfeste Auflagetisch einen Teil der Werkstückauflage und die Einlage den anderen Teil der Werkstückauflage bilden kann. Die Höhe der Einlage ist stufenlos daher auf die Höhe des Auflagetisches einstellbar, wobei sich der drehfeste Auflagetisch vzw. beidseitig der Hochachse, insbesondere bis nahe zur Hochachse erstreckt. Dies kann insbesondere dadurch realisiert werden, dass das Drehmittel sich teilweise unterhalb des Auflagetisches erstreckt. Insbesondere die Drehmittelbasis kann sich teilweise unterhalb des Aufnahmetisches, bspw. in Form eines Drehtellers, erstrecken. Dadurch, dass der Auflagetisch die Drehmittelbasis teilweise überdeckt, kann eine sehr kompakt ausgebildete Kapp- und Gehrungssäge realisiert werden, die nur wenig Raumbedarf benötigt und insbesondere gut transportierbar ist. Über der Drehmittelbasis/ über den Drehteller kann ein Ausleger aufragen. Die Einlage kann über die Drehmittelbasis, insbesondere aus der Aufnahme heraus aufragen. Die eingangs beschriebenen Nachteile sind daher vermieden und entsprechende Vorteile erzielt.

Es gibt nun eine Vielzahl von Möglichkeiten, die erfindungsgemäße Kapp- und Gehrungssäge in vorteilhafter Art und Weise auszugestalten und weiterzubilden. Hierfür darf zunächst auf die dem Patentanspruch 1 nachgeordneten Patentansprüche verwiesen werden. Im folgenden wird nun eine bevorzugte Ausgestaltung der Erfindung anhand der Zeichnung und der dazugehörenden Beschreibung näher erläutert. In der Zeichnung zeigt:
- Fig. 1: in einer schematischen, perspektivischen Darstellung eine Kapp- und Gehrungssäge von schräg oben, vorne links,
- Fig. 2: in einer schematischen, perspektivischen Darstellung die Kapp- und Gehrungssäge aus Fig. 1 von schräg oben, vorne rechts,
- Fig. 3: in einer schematischen, perspektivischen Darstellung die Kapp- und Gehrungssäge aus Fig. 1 und 2 von schräg oben, hinten,
- Fig. 4: in einer schematischen, perspektivischen Darstellung die Kapp- und Gehrungssäge aus den Fig. 1 bis 3 von schräg unten, hinten,
- Fig. 5: in einer schematischen, perspektivischen Darstellung die Kapp- und Gehrungssäge aus den Fig. 1 bis 4 von unten, vorne,
- Fig. 6: in einer weiteren schematischen, perspektivischen Darstellung die Kapp- und Gehrungssäge aus den Fig. 1 bis 5 ebenfalls von unten, vorne,
- Fig. 7: in einer schematischen Draufsicht die Kapp- und Gehrungssäge aus den Fig. 1 bis 6,
- Fig. 8: in einer Detailansicht den Ausschnitt D aus der Fig. 7 mit dem Ausleger der Kapp- und Gehrungssäge aus den Fig. 1 bis 7,
- Fig. 9: in einem schematischen Vertikalschnitt entlang der Linie E aus Fig. 8 den Ausleger der Kapp- und Gehrungssäge, und
- Fig. 10: in einer Detailansicht den Ausschnitt A aus Fig. 7 mit dem Ausleger der Kapp- und Gehrungssäge ähnlich wie in Fig. 8,
- Fig. 11: in einem schematischen Vertikalschnitt entlang der Linie C aus Fig. 10 den Ausleger der Kapp- und Gehrungssäge,
- Fig. 12: in einem schematischen Vertikalschnitt entlang der Linie B aus Fig. 10 den Ausleger der Kapp- und Gehrungssäge, und
- Fig. 13: in einer schematischen Explosionsdarstellung die wesentlichen Komponenten der Kapp- und Gehrungssäge.

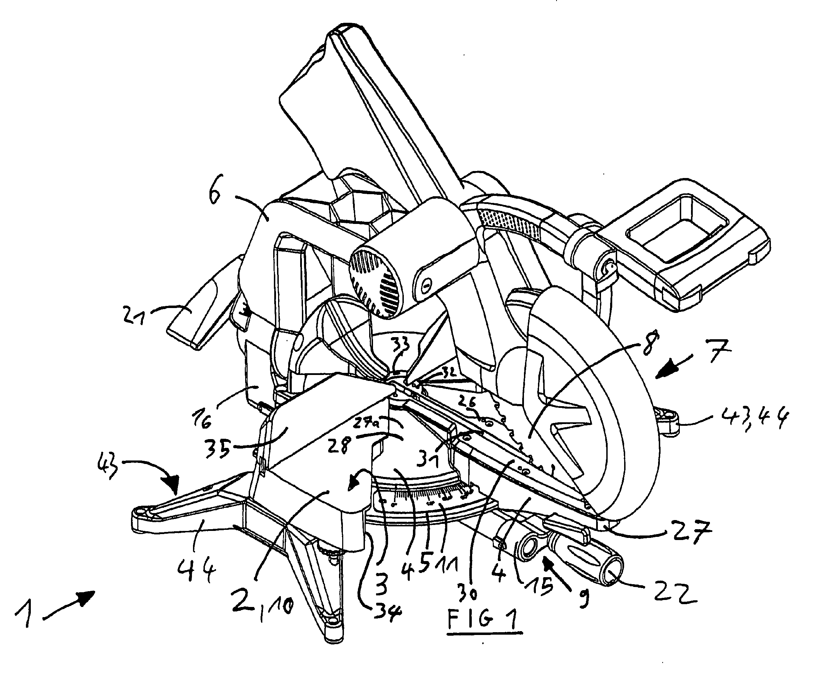

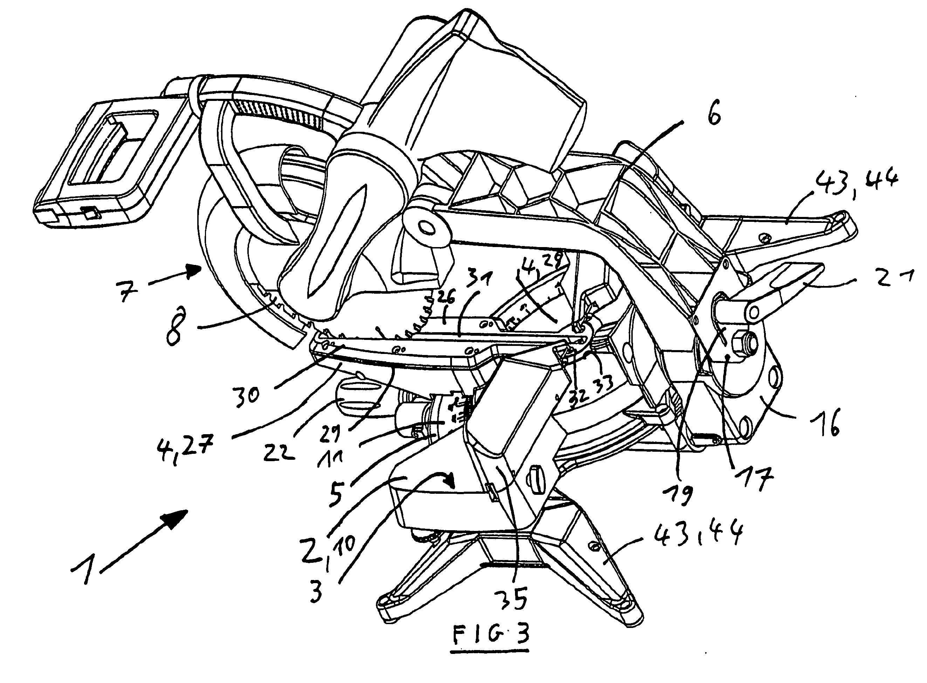

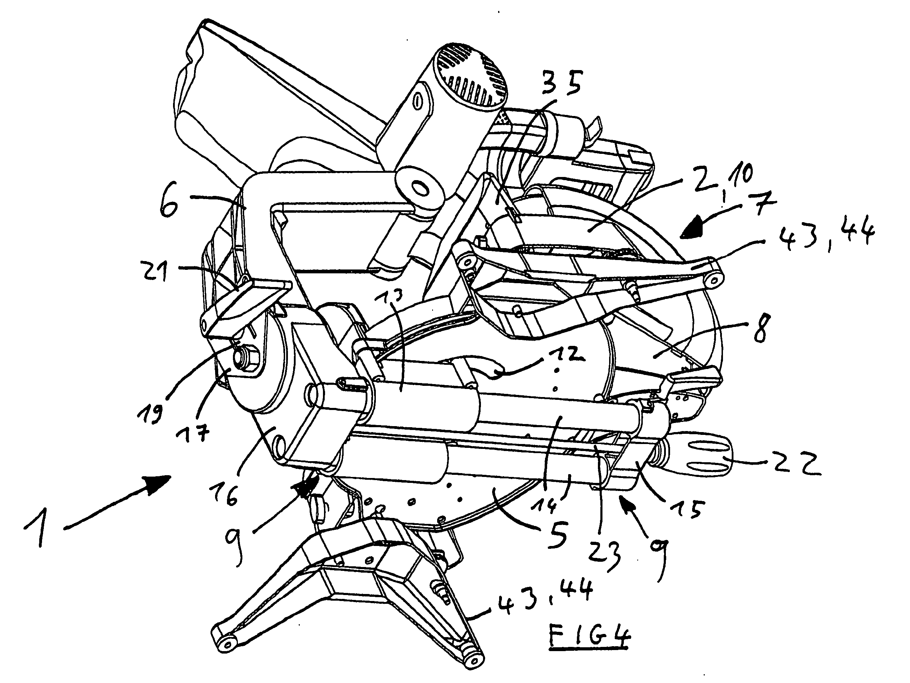

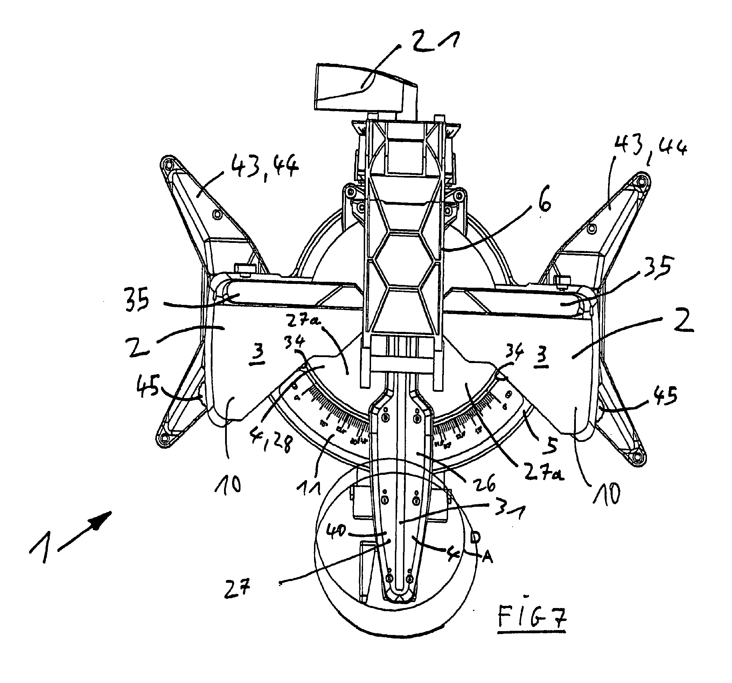

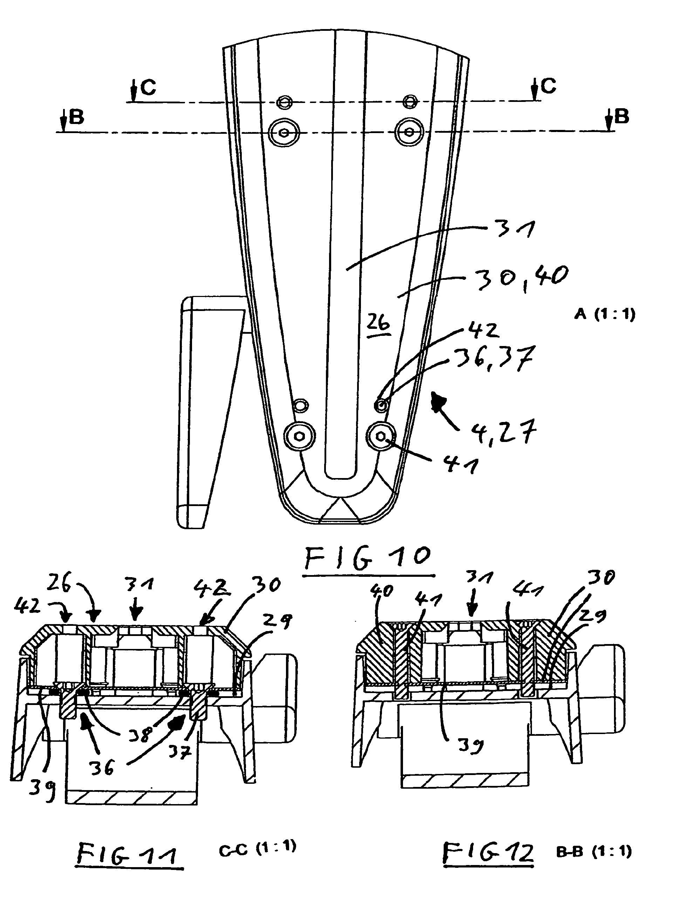

In den Fig. 1 bis 13 ist eine Kapp- und Gehrungssäge 1 bzw. sind deren wesentliche Komponenten hier gut zu erkennen.

Mit der Kapp- und Gehrungssäge 1 können insbesondere Leisten, Paneele oder Platten auf die gewünschte Länge, vzw. einschließlich der gewünschten Gehrungsschnitte geschnitten werden. Mit der Kapp- und Gehrungssäge 1 können nicht nur Schnitte rechtwinklig zur Längsachse des nicht dargestellten Werkstückes durchgeführt werden, sondern auch sogenannte Gehrungsschnitte in einem spitzen Winkel zur Längsachse des Werkstückes.

Die Kapp- und Gehrungssäge weist einen Auflagetisch 2 auf. Auf dem Auflagetisch 2 können die Werkstücke insbesondere quer angeordnet werden, d. h. die Werkstücke erstrecken sich mit ihrer Längsachse quer auf dem Auflagetisch 2. Der Auflagetisch 2 weist eine Oberseite 3 auf, wobei die Oberseite 3 zur Auflage des nicht dargestellten Werkstückes dient.

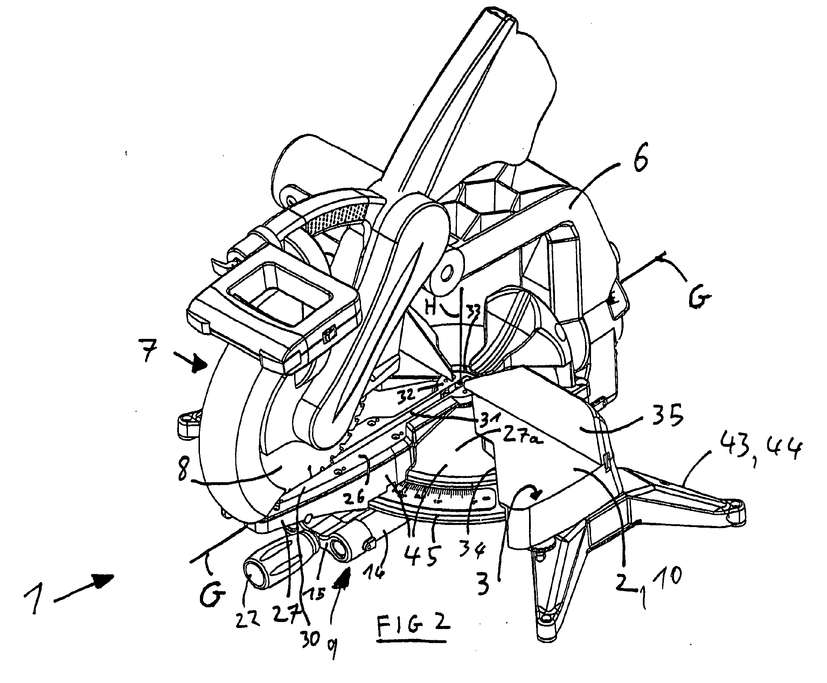

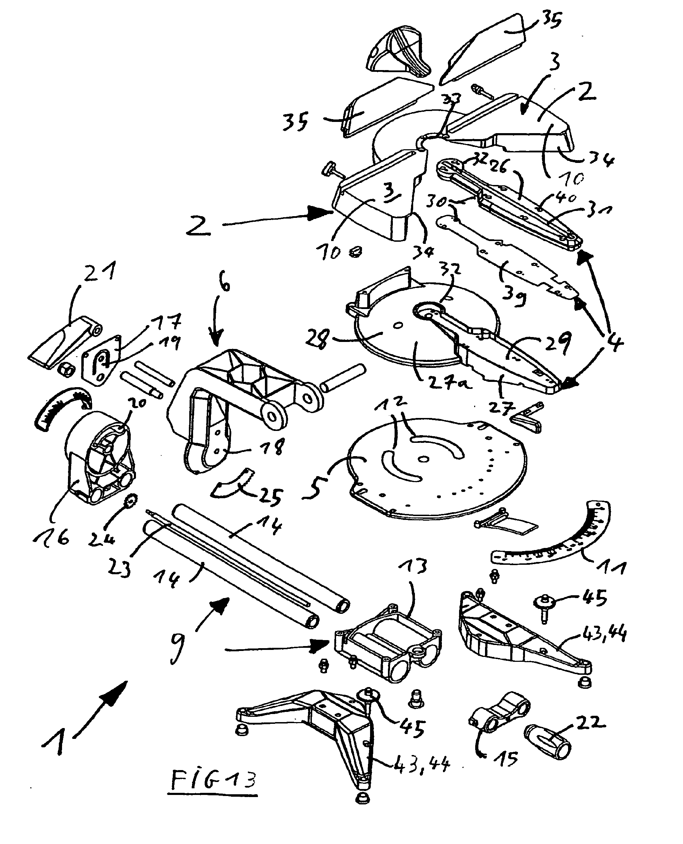

Die Kapp- und Gehrungssäge 1 weist ferner ein relativ zum Auflagetisch 2 um eine Hochachse H schwenkbares Drehmittel 4 auf. Die Hochachse H ist in Fig. 2 eingezeichnet. Die im folgenden noch ausführlich beschriebenen Bestandteile des Drehmittels 4 sind insbesondere in Fig. 13 gut zu erkennen. Das Drehmittel 4 ist hier auf einer Bodenplatte 5 angeordnet. Die Bodenplatte 5 dient als Abstützelement (nicht näher bezeichnet) für das Drehmittel 4. Auf der Bodenplatte 5 ist das Drehmittel 4 um die Hochachse H (vgl. Fig. 2) schwenkbar abgestützt.

Mit dem Drehmittel 4 ist funktional wirksam ein Gehrungsarm 6 verbunden. Der Gehrungsarm 6 ist zusammen mit dem Drehmittel 4 um die Hochachse H schwenkbar. Am Gehrungsarm 6 ist eine Sägevorrichtung 7 angeordnet. Die Sägevorrichtung 7 ist oberhalb des Auflagetisches 2 angeordnet. Die Sägevorrichtung 7 ist auf- und ab bewegbar, so dass ein auf dem Auflagetisch 2 angeordnetes Werkstück mit der Sägevorrichtung 7 geschnitten bzw. gekappt werden kann. Die Sägevorrichtung 7 weist ein Sägeblatt 8, insbesondere ein Kreissägeblatt auf, das vzw. motorisch antreibbar ist. Die Sägevorrichtung 7 ist an einem Ende des Gehrungsarmes 6 an einer nicht näher bezeichneten Querachse nach oben und/oder unten schwenkbar gelagert. Der Gehrungsarm 6 und die Sägevorrichtung 7 sind relativ zum Drehmittel 4 und zum Auflagetisch 2 um eine Gehrungsachse G (vgl. Fig. 2) schwenkbar. Die Gehrungsachse G erstreckt sich im wesentlichen in Radialrichtung bzgl. der Hochachse H. Die Gehrungsachse G steht senkrecht auf der Hochachse H.

Die Sägevorrichtung 7 ist entlang der Gehrungsachse G mittels einer Gleitführungsvorrichtung 9 verschiebbar angeordnet. Die Kapp- und Gehrungssäge 1 ist daher auch als Zugsäge ausgebildet. Durch die Gleitführungsvorrichtung 9 ist die Länge des Sägeschnitts nicht auf den Durchmesser des Sägeblattes 8 beschränkt, sondern um den möglichen Verschiebeweg der Sägevorrichtung 7 mittels der Gleitführungsvorrichtung 9 erweitert. Die Länge des Sägeschnitts ergibt sich daher aus der Zuglänge und dem Durchmesser des Sägeblattes 8. Da die Sägevorrichtung 7 sowohl um die Hochachse H als auch um die Gehrungsachse G schwenkbar ist, können mit der Kapp- und Gehrungssäge 1 auch sogenannte "Doppelgehrungsschnitte" ausgeführt werden.

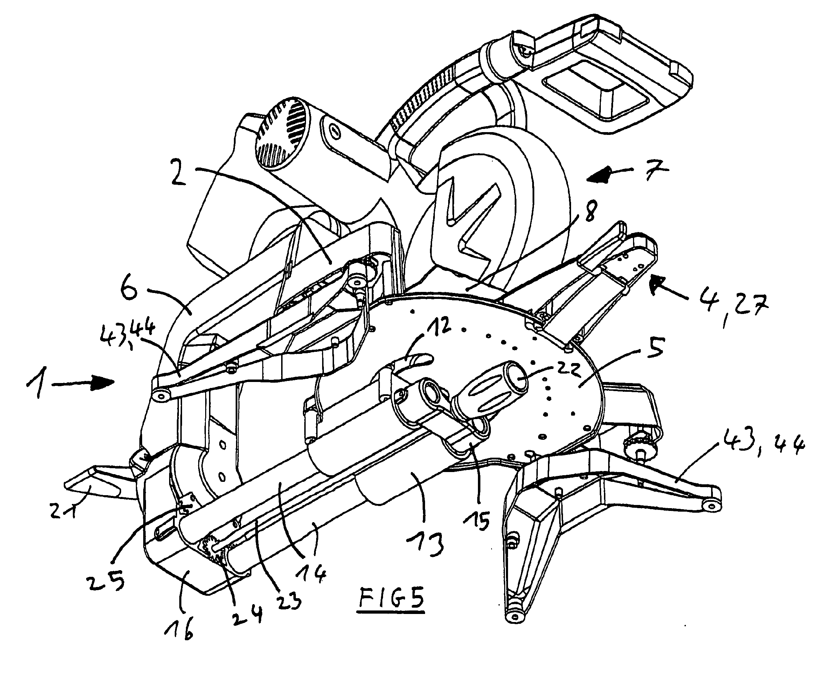

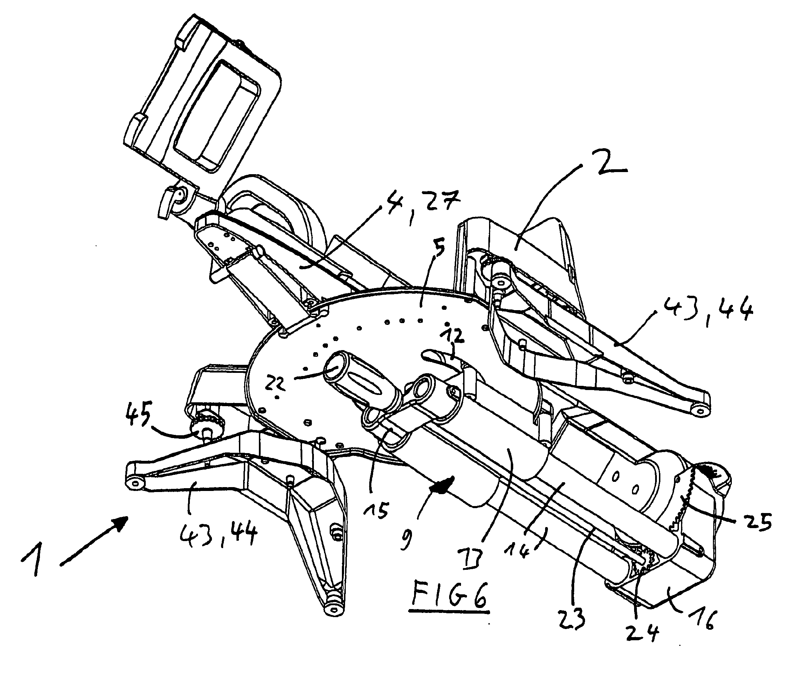

Die Gleitführungsvorrichtung 9 ist hier im wesentlichen unterhalb der Bodenplatte 5 angeordnet. Das Drehmittel 4 ist hier teilweise im Bereich zwischen dem Auflagetisch 2 und der Bodenplatte 5 angeordnet. Dadurch, dass das Drehmittel 4, die Bodenplatte 5 und die Gleitführungsvorrichtung 9 als getrennte Baugruppen ausgebildet sind, die in einer Art "Sandwich-Bauweise" sequentiell übereinander angeordnet sind, kann sich der ortsfeste Auflagetisch 2 im wesentlichen in seitlicher Richtung bis zur Hochachse H erstrecken und das Drehmittel 4 zusätzlich noch zumindest teilweise überdecken. Dadurch ist die drehfeste Werkstückauflagefläche bzw. die Oberseite 3 des Auflagetischs 2 vergrößert. Beim Einstellen der Schwenkstellung um die Hochachse H hat das Werkstück daher einen großflächigen Kontakt mit dem drehfesten Auflagetisch 2, was eine sichere Auflage des Werkstücks, insbesondere beim Einstellen der Schwenkstellung um die Hochachse H ermöglicht. In einer maximal ausgefahrenen Stellung ist die Gleitführungsvorrichtung 9 in den Fig. 5 und 6 dargestellt.

Der Auflagetisch 2 weist zwei Vorsprünge 10 auf. Die Bodenplatte 5 und der Auflagetisch 2 sind an den Vorsprüngen 10 miteinander verschraubt. Der Auflagetisch 2, der im wesentlichen durch die beiden Vorsprünge 10 gebildet wird, und die Bodenplatte 5 bilden eine stabile Baugruppe. Die Bodenplatte 5 ist vzw. scheibenförmig ausgebildet. Auf der Bodenplatte 5 ist eine Winkelskala 11 angeordnet. Die Winkelskala 11 erstreckt sich dabei bogenförmig zwischen den zwei Vorsprüngen 10. Das Drehmittel 4 ist teilweise zwischen den Vorsprüngen 10 angeordnet.

Die Bodenplatte 5 weist hier mindestens eine bogenförmige Führungsnut 12 auf. Wie aus Fig. 13 gut ersichtlich ist, sind hier zwei Führungsnuten 12 vorgesehen. Die Führungsnuten 12 liegen sich bzgl. der Hochachse H gegenüber und sind konzentrisch zur Hochachse H angeordnet. Die Gleitführungsvorrichtung 9 und das Drehmittel 4 sind hier durch mindestens ein durch die Führungsnuten 12 reichendes Befestigungselement, vzw. ein Bolzen oder eine Schraube (hier nicht im Einzelnen dargestellt), miteinander verbunden. Insbesondere können zwei oder mehr Bolzen durch die Führungsnut 12 reichen und das Drehmittel 4 und die Gleitführungsvorrichtung 9 miteinander verbinden. Im Bereich der Hochachse H ragt durch die Bodenplatte 5 eine Schraube/ein Bolzen (nicht näher dargestellt), um das Drehmittel 4 um die Hochachse H schwenkbar an der Bodenplatte 5 zu lagern. Das Drehmittel 4 weist im Bereich der Hochachse H eine entsprechende Aufnahme (nicht dargestellt) auf, wobei die Schraube/der Bolzen in die Aufnahme eingreift.

Die Gleitführungsvorrichtung 9 weist eine vzw. blockartig ausgebildete Gleitführung 13 auf. Die Gleitführungsvorrichtung 9 weist mindestens eine Führungsstange 14 auf. Hier sind zwei Führungsstangen 14 vorgesehen. Die Gleitführung 13 ist wie oben beschrieben mit dem Drehmittel 4 verbunden. Die Gleitführung 13 führt die beiden parallel zueinander ausgerichteten Führungsstangen 14, wobei sich die Führungsstangen 14 parallel zur Gehrungsachse G erstrecken. Die Führungsstangen 14 sind relativ zur Gleitführung 13 verschiebbar angeordnet. Die Gleitführung 13 weist zwei an den Querschnitt der Führungsstangen 14 angepasste Führungsstangenaufnahmen (nicht näher bezeichnet) auf. Die beiden Führungsstangen 14 sind an einem Ende mit einem Stangenklemmstück 15 miteinander verbunden. Am anderen Ende der Führungsstangen 14 ist eine Gehrungsarmhalterung 16 angeordnet, die die beiden Führungsstangen 14 in entsprechenden (nicht näher bezeichneten) Aufnahmen aufnimmt. Zwischen dem Stangenklemmstück 15 und der Gehrungsarmhalterung 16 umgreift die Gleitführung 13 die beiden Führungsstangen 14.

Das Drehmittel 4 ist über die Gleitführungsvorrichtung 9 und über die Gehrungsarmhalterung 16 mit dem Gehrungsarm 6 verbunden. Der Gehrungsarm 6 ist vzw. im wesentlichen L-förmig ausgebildet. Am Gehrungsarm 6 bzw. an der Sägevorrichtung 7 ist vzw. ein Elektromotor zum Antrieb des Sägeblattes 8 angeordnet.

Der Gehrungsarm 6 ist um die Gehrungsachse G schwenkbar an der Gehrungsarmhalterung 16 gelagert. Am Gehrungsarm 6 ist an einer Seite ein Gehrungsblech 17 und an einer anderen Seite eine Gegenhaltplatte 18 angeordnet. Die Gegenhaltplatte 18 ist hier am Gehrungsarm 6 ausgebildet. Zwischen dem Gehrungsblech 17 und der Gegenhaltplatte 18 ist die Gehrungsarmhalterung 16 im montierten Zustand angeordnet. Die Gehrungsarmhalterung 16 ist vzw. mit einem Bolzen (nicht näher bezeichnet) mit dem Gehrungsblech 17 und der Gegenhaltplatte 18 verbunden, so dass der Gehrungsarm 6 um den Bolzen geschwenkt werden kann. Der Bolzen erstreckt sich hierbei entlang der Gehrungsachse G. Zur Feststellung des Gehrungsarmes 6 in einer Schwenkstellung um die Gehrungsachse G weist das Gehrungsblech 17 eine biegbare Lasche 19 auf (vgl. Fig. 13). Die biegbare Lasche 19 weist eine nicht näher bezeichnete Bolzenöffnung auf. Die Gehrungsarmhalterung 16 weist ein bogenförmiges Langloch 20 auf, wobei durch das Langloch 20 und die Bolzenöffnung der Lasche 19 ein Gehrungseinstellbolzen (nicht näher bezeichnet) durchgreift. Der Gehrungseinstellbolzen ist mit einem Hebelgriff 21 verbunden. Durch ein Betätigen des Hebelgriffes 21 kann die Lasche 19 gegen die Gehrungsarmhalterung 16 gezogen werden, so dass die Lasche 19 den Gehrungsarm 6 relativ zur Gehrungsarmhalterung 16 in einer definierten Schwenkstellung um die Gehrungsachse G festklemmt. Es kann auch eine anders arbeitende Feststelleinrichtung vorgesehen sein, um einen bestimmten Winkel, d. h. eine bestimmte Schwenkstellung des Gehrungsarmes 6, einstellen und fixieren zu können.

Die Schwenkstellung des Gehrungsarmes 6 erfolgt hier mit einer Zahnradverstellung. Dazu ist ein Drehgriff 22 vorgesehen, der mit einer Welle 23 verbunden ist. Die Welle 23 erstreckt sich dabei zwischen den beiden Führungsstangen 14. Auf der Welle 23 ist ein Zahnrad 24 angeordnet. Die Welle 23 erstreckt sich zwischen dem Stangenklemmstück 15 und der Gehrungsarmhalterung 16 und ist an diesen gelagert. Das Zahnrad 24 ist im Bereich der Gehrungsarmhalterung 16 bzw. der Gegenhaltplatte 18 angeordnet. An der Gegenhaltplatte 18 bzw. allgemeiner am Gehrungsarm 6 ist ein Zahnscheibenbogen 25 befestigt, wobei der Zahnscheibenbogen 25 eine Außenverzahnung (nicht näher bezeichnet) aufweist, die mit dem Zahnrad 24 auf der Welle 23 in Eingriff steht. Der Zahnscheibenbogen 25 ist dabei konzentrisch zur Gehrungsachse G angeordnet. Durch ein Drehen des Drehgriffs 22 ist die Welle 23 mit dem Zahnrad 24 drehbar, so dass der mit dem Zahnrad 24 in Eingriff stehende Zahnscheibenbogen 25 bewegt wird und dadurch der Gehrungsarm 6 verschwenkt wird.

Wie bspw. in den Fig. 1, 2 und 3 gut zu erkennen ist, überdeckt der Auflagetisch 2 das Drehmittel 4 zumindest teilweise. Die sich nur teilweise in Höhe des Auflagetisches 2 erstreckende Oberseite 26 des Drehmittels 4 ragt dabei über die restliche Oberseite (nicht näher bezeichnet) des Drehmittels 4 hinaus. Das Drehmittel 4 hat hier die Form eines Drehtellers 27a mit einem daran ausgebildeten Ausleger 27. Das Drehmittel 4 wird hier von einer Drehmittelbasis 28 in Form des Drehtellers 27a mit dem Ausleger 27 gebildet. Die Drehmittelbasis 28 weist eine Aufnahme 29 auf. Die nach oben offene Aufnahme 29 erstreckt sich im wesentlichen von der Hochachse H radial entlang des Drehtellers 27a und über den Ausleger 27. In der Aufnahme 29 ist eine Einlage 30 angeordnet.

Die Einlage 30 hat vzw. die Form eines Sägeschlitzeinsatzes. Die Einlage 30 ist vzw. passend zur Aufnahme 29 geformt. Entlang des Auslegers 27 und weiter in den Drehteller 27a hinein erstreckt sich bis zur Hochachse H ein Sägeschlitz 31, wobei die Einlage 30 den Sägeschlitz 31 zumindest teilweise - hier vzw. vollständig begrenzt.

Der Ausleger 27 und damit der Sägeschlitz 31 erstrecken sich im wesentlichen von der Mitte des Drehtellers 27a der Drehmittelbasis 28 radial nach außen, parallel zur Gehrungsachse G. Die Drehmittelbasis 28 ist hier durch die sich durch die Bodenplatte 5 hindurch erstreckende, nicht näher bezeichnete Schraube/Bolzen drehbar gelagert, so dass die Drehmittelbasis 28 über die durch die Führungsnuten 12 reichenden Bolzen mit der Gleitführung 13 gekoppelt ist. An der Drehmittelbasis 28 ist vzw. einstückig der Ausleger 27 und der Drehteller 27a ausgebildet. Der Drehteller 27a ist im Bereich der Hochachse H dicker ausgebildet als an seinem Rand, wodurch der Ausleger 27 zum Umfang des Drehtellers 27a hin über den Drehteller 27a weiter aufragt.

Im Bereich des Auslegers 27 erstreckt sich auch die Aufnahme 29 für die Einlage 30. Der Sägeschlitz 31 erstreckt sich im Drehteller 27a bis in den Bereich der Hochachse H. Im Bereich der Hochachse H weist das Drehmittel 4, insbesondere die Drehmittelbasis 28 und die Einlage 30 einen Lagervorsprung 32 auf. Der Lagervorsprung 32 ist teilzylindrisch ausgebildet, wobei der Auflagetisch 2 eine passende, zumindest ebenfalls teilzylindrische Öffnung 33 aufweist, in die der Lagervorsprung 32 passend eingreift. Der Auflagetisch 2 begrenzt eine im wesentlichen V-förmige Aussparung 34, wobei der Ausleger 27 und damit das Drehmittel 4 innerhalb der Aussparung 34 schwenkbar ist. Die V-förmige Aussparung 34 mündet in die teilzylindrische Öffnung 33. Die Aussparung 34 bildet hier zu jeder Seite einen Anschlag (nicht näher bezeichnet) für den Ausleger 27. Vzw. ist das Drehmittel 4 von +45° Grad bis -45° Grad schwenkbar. Die Aussparung 34 hat daher vzw. einen Öffnungswinkel von 90° Grad oder von mehr als 90° Grad. Die Schwenkbewegung des Auslegers 27 zusammen mit dem Rest des Drehmittels 4 ist durch die Aussparung 34 begrenzt.

Die Vorsprünge 10 des Auflagetisches 2 sind im wesentlichen spitzwinklig ausgebildet und durch Anschlagleisten 35 begrenzt. Die Anschlagleisten 35 dienen zum Anlegen des Werkstückes. Die Anschlagleisten 35 erstrecken sich dabei fluchtend zueinander vzw. im wesentlichen bis zur Hochachse H. Die Anschlagleisten 35 können sich dabei im wesentlichen bis zur vzw. teilzylindrischen Öffnung 33 bzw. bis zum Lagervorsprung 32 oder knapp über den Lagervorsprung 32 hinaus erstrecken. In der hier dargestellten Ausgestaltung weist der Auflagetisch 2 jeweils eine Nut (nicht näher bezeichnet) auf, in die Anschlagleisten 35 mit einem nicht näher bezeichneten länglichen Vorsprung eingreifen. Die Anschlagleisten 35 sind entlang der Nut verschiebbar angeordnet. Die Anschlagleisten 35 sind vzw. mit jeweils einer Klemmschraube (nicht näher bezeichnet) in der Nut lösbar feststellbar.

Die Kapp- und Gehrungssäge 1 steht auf einem Basisgestell 43. Das Basisgestell 43 besteht hier im wesentlichen aus zwei Füßen 44. Die stabile Baugruppe bestehend aus dem Auflagetisch 2 und der Bodenplatte 5 ist über das Basisgestell 43, insbesondere die beiden Füße 44, am Boden abgestützt. Das Basisgestell 43, insbesondere die Füße 44, ist/sind beweglich, vzw. schwenkbeweglich, an der Baugruppe bestehend aus dem Auflagetisch 2 und der Bodenplatte 5 angeordnet, so dass Unebenheiten des Bodens ausgleichbar sind. Die Schwenkstellung der beiden Füße 44 ist relativ zur Baugruppe mit einer Einstellschraube 45 einstellbar (vgl. Fig. 13).

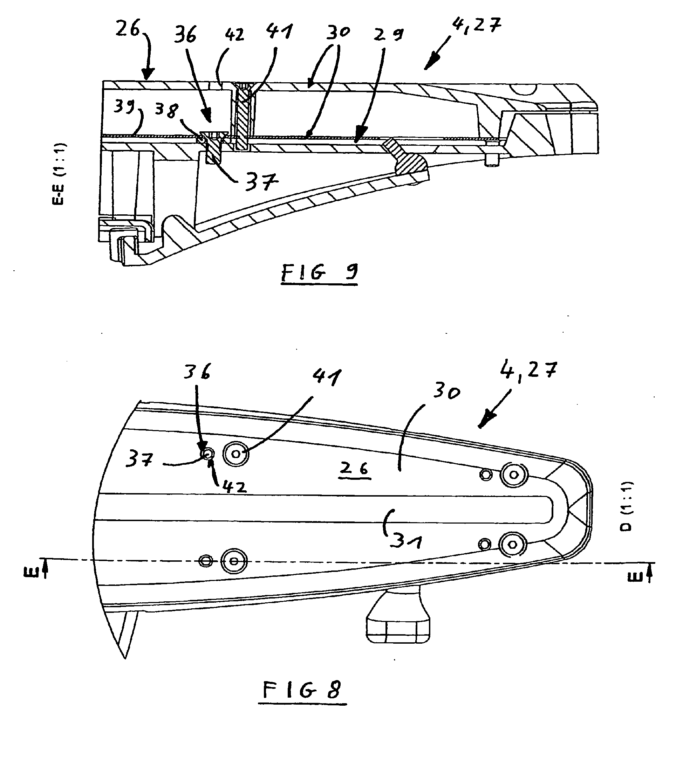

Die eingangs beschriebenen Nachteile sind nun dadurch vermieden, dass die Einlage 30 und/oder die Aufnahme 29 derart ausgebildet ist bzw. sind, so dass die Einlage 30 - relativ zum Auflagtisch 2 und/oder relativ zur Drehmittelbasis 28 - höhenverstellbar anordenbar und/oder die höhenmäßige Ausrichtung der Einlage 30 einstellbar ist. Hierzu sind mehrere Stellmittel 36 vorgesehen mit denen Hilfe die Einlage 30, insbesondere relativ zum Auflagetisch 2 vzw. stufenlos höhenverstellbar anordenbar ist bzw. angeordnet wird (vgl. insbesondere hierzu die Fig. 8 und 9). Dies hat den Vorteil, dass die Höhe der Oberseite 26 des Auslegers 17 bzw. des Lagervorsprungs 32, also die Höhe der Oberseite 26 der Einlage 30 mit der Höhe des Auflagetisches 2 nivelliert werden kann. Die Einlage 30 ist daher relativ zur Drehmittelbasis 28 höhenverstellbar ausgebildet. Es sind mehrere Stellmittel 36 vorgesehen..

Das jeweilige Stellmittel 36 weist eine Stellschraube 37 auf. Das Stellmittel 36, insbesondere die Stellschraube 37, verbinde die Drehmittelbasis 28 und die Einlage 30 miteinander Ferner weist das Stellmittel 36 vzw. ein Federelement 38 auf. Das Federelement 38 ist vzw. zwischen der Drehmittelbasis 28 und der Einlage 30 angeordnet. Das Federelement 38 ist durch das Stellmittel 36 zusammengedrückt und wirkt vzw. der Kraft der Stellschraube 37 entgegen. Die Stellschraube 37 zieht vzw. die Einlage 30 gegen die Drehmittelbasis 28 bzw. gegen den Boden der Aufnahme 29. Hierzu greift die Stellschraube in eine nicht näher bezeichnete am Boden der Aufnahme vorgesehene Gewindeöffnung ein. Das Federelement 38 drückt die Einlage 30 vom Boden der Aufnahme 29 weg nach oben. Durch Anziehen der Stellschraube 37 oder Lösen der Stellschraube 37 kann so die Höhe der Einlage 30 relativ zur Drehmittelbasis 28 und damit relativ zum Auflagetisch 2, vzw. stufenlos eingestellt werden. Die Stellschraube 37 erstreckt sich dabei in vertikaler Richtung. Das Federelement 38 ist hier ringförmig ausgebildet und umringt die Stellschraube 37.

Die Einlage 30 ist zur einfacheren Montage mehrteilig ausgebildet und weist eine Befestigungsplatte 39 und eine oberhalb der Befestigungsplatte 39 angeordnete Werkstückauflagestruktur 40 auf. Die Stellschraube 37 greift dabei vzw. an der horizontal angeordneten Befestigungsplatte 39 an. Auf der Befestigungsplatte 39 ist dann die Werkstückauflagestruktur 40 befestigt. Die Werkstückauflagestruktur 40 ist hier mit Befestigungsschrauben 41 an der Befestigungsplatte 39 befestigt.

Die Werkstückauflagestruktur 40 ist vzw. aus einem Kunststoff hergestellt. Um die Stellschrauben 37 mit einem Werkzeug erreichen zu können, ist die Werkstückauflagestruktur 40 mit einer entsprechenden Anzahl von Stellschraubenöffnungen 42 versehen. Die Stellschraubenöffnungen 42 sind oberhalb der Stellschrauben 37 angeordnet. Durch die Stellschraubenöffnungen 42 kann die Stellschraube 37 mit einem entsprechenden Werkzeug betätigt werden.

Es sind nun insbesondere aus den Fig. 8 bis 12 mehrere Stellmittel 36 vorgesehen. Wie bereits oben erwähnt, ist die Einlage 30 zweiteilig ausgebildet, weist also einerseits eine Befestigungsplatte 39 im unteren Bereich und im oberen Bereich eine Werkstückauflagestruktur 40 auf. Hierbei wird die Werkstückauflagestruktur 40 mit Hilfe von Befestigungsschrauben 41 an der Befestigungsplatte 39 befestigt, wie gut aus den Fig. 8 und 9 ersichtlich ist. Über die Stellschraubenöffnungen 42 kann nun ein Benutzer manuell die jeweiligen Stellmittel 36 bedienen, insbesondere die Stellschrauben 37 betätigen. Bei entsprechender Lockerung der Stellschrauben 37 (also bei Drehrichtung nach links) wird die Befestigungsplatte 39 über die Federelemente 38 nach oben gedrückt, so dass hierüber dann die Oberseite 26, insbesondere die Oberseite der Werkstückauflagestruktur 40 ebenfalls nach oben verschoben, also deren Höhe verstellt/ eingestellt wird. Im Gegensatz hierzu wird, wenn die Stellschrauben 37 angezogen werden (also nach rechts gedreht werden) eine größere Kraft auf die Federelemente 38 ausgeübt, so dass die Bodenplatte 39 mehr nach unten gezogen wird, so dass die Oberseite 26 in ihrer Höhe nach unten verstellt wird.

Die Federelemente 38 können nun aus unterschiedlichen Materialien hergestellt werden. Denkbar sind die verschiedenartigsten Kunststoffelemente, aber auch entsprechende Stahl-/ Aluminium- bzw. Blechmaterialen, die entsprechende Federeigenschaften haben. Dies ist abhängig vom jeweiligen Anwendungsfall. Entscheidend ist die Möglichkeit vzw. der manuellen Einstellbarkeit/ Ausrichtung der Oberseite 26 der Einlage 30, insbesondere die Oberseite 26 der Werkstückauflagestruktur 40 relativ zum Auflagetisch 20, eine stufenlose Höhenverstellung wie oben erwähnt.

Durch die Realisierung der oben genannten Merkmale sind entscheidende Nachteile vermieden und entsprechende Vorteile erzielt.

### Bezugszeichenliste:

- 1: Kapp- und Gehrungssäge
- 2: Auflagetisch
- 3: Oberseite
- 4: Drehmittel
- 5: Bodenplatte
- 6: Gehrungsarm
- 7: Sägevorrichtung
- 8: Sägeblatt
- 9: Gleitführungsvorrichtung
- 10: Vorsprung
- 11: Winkelskala
- 12: Führungsnut
- 13: Gleitführung
- 14: Führungsstange
- 15: Stangenklemmstück
- 16: Gehrungsarmhalterung
- 17: Gehrungsblech
- 18: Gegenhaltplatte
- 19: Lasche
- 20: Langloch
- 21: Hebelgriff
- 22: Drehgriff
- 23: Welle
- 24: Zahnrad
- 25: Zahnscheibenbogen
- 26: Oberseite
- 27: Ausleger
- 27a: Drehteller
- 28: Drehmittelbasis
- 29: Aufnahme
- 30: Einlage
- 31: Sägeschlitz
- 32: Lagervorsprung
- 33: Öffnung
- 34: Aussparung
- 35: Anschlagleiste
- 36: Stellmittel
- 37: Stellschraube
- 38: Federelement
- 39: Befestigungsplatte
- 40: Werkstückauflagestruktur
- 41: Befestigungsschrauben
- 42: Stellschraubenöffnungen
- 43: Basisgestell
- 44: Fuß
- 45: Einstellschraube

- H: Hochachse
- G: Gehrungsachse

## Patentansprüche

1. Kapp- und Gehrungssäge (1) mit einem Auflagetisch (2) mit einem relativ zum Auflagetisch (2) um eine Hochachse (H) drehbaren Drehmittel (4), mit einem, insbesondere um die Hochachse (H) schwenkbaren Gehrungsarm (6), mit einer am Gehrungsarm (6) angeordneten Sägevorrichtung (7), wobei die Sägevorrichtung (7) oberhalb des Auflagetisches (2) auf- und ab bewegbar, vzw. schwenkbar, angeordnet ist, wobei das Drehmittel (4) eine Drehmittelbasis (28) mit einer Aufnahme (29) und eine in der Aufnahme (29) angeordnete Einlage (30) aufweist, wobei die Einlage (30) vzw. zumindest teilweise einen Sägeschlitz (31) begrenzt, **dadurch gekennzeichnet, dass** die Einlage (30) und/oder die Aufnahme (29) derart ausgebildet ist bzw. sind, so dass die Einlage (30) - relativ zum Auflagetisch (2) und/oder relativ zur Drehmittelbasis (28) - höhenverstellbar anordenbar und/oder die höhenmäßige Ausrichtung der Einlage (30) einstellbar ist, dass mehrere Stellmittel (36) für die Höhenverstellung bzw. Ausrichtung der Einlage (30) vorgesehen sind und das jeweilige Stellmittel (36) eine Stellschraube (37) aufweist, wobei die jeweilige Stellschraube (37) die Drehmittelbasis (28) und die Einlage (30) wirksam miteinander verbindet, wobei die Einlage (30) mehrteilig ausgebildet ist, nämlich eine Befestigungsplatte (39) und eine oberhalb der Befestigungsplatte (39) angeordnete Werkstückauflagestruktur (40) aufweist, dass die Stellschrauben (37) an der Befestigungsplatte (39) angreifen und in am Boden der Aufnahme (29) vorgesehenen Gewindeöffnungen eingreifen, und dass die Werkstückauflagestruktur (40) eine entsprechende Anzahl von Stellschraubenöffnungen (42) aufweist, die oberhalb der Stellschrauben (37) angeordnet sind.

2. Kapp- und Gehrungssäge nach dem vorstehenden Anspruch, **dadurch gekennzeichnet, dass** das Stellmittel (36) ein Federelement (38) aufweist.

3. Kapp- und Gehrungssäge nach einem der vorstehenden Ansprüche, **dadurch gekennzeichnet, dass** das Federelement (38) zwischen der Drehmittelbasis (28) und der Einlage (30) angeordnet ist.

4. Kapp- und Gehrungssäge nach einem der vorstehenden Ansprüche, **dadurch gekennzeichnet, dass** das Federelement (38) ringförmig ausgebildet ist und das Stellmittel (36), insbesondere die Stellschraube (37), umringt.

5. Kapp- und Gehrungssäge nach einem der vorstehenden Ansprüche, **dadurch gekennzeichnet, dass** das Drehmittel (4) einen Ausleger (27) und vzw. einen Drehteller (27a) aufweist, wobei die Einlage (30) sich entlang des Auslegers (27) zusammen mit der Aufnahme (29) erstreckt.

6. Kapp- und Gehrungssäge nach einem der vorstehenden Ansprüche, **dadurch gekennzeichnet, dass** die Einlage (30), insbesondere die Werkstückauflagestruktur (40) im Bereich der Hochachse (H) einen teilzylindrischen Lagervorsprung (32) bildet und der Auflagetisch (2) eine zumindest teilzylindrische Öffnung (33) aufweist, wobei der Lagervorsprung (32) passend in die Öffnung (33) eingreift.

7. Kapp- und Gehrungssäge nach einem der vorstehenden Ansprüche, **dadurch gekennzeichnet, dass** das Drehmittel (4) vom Auflagetisch (2) zumindest teilweise überdeckt ist.

8. Kapp- und Gehrungssäge nach einem der vorstehenden Ansprüche, **dadurch gekennzeichnet, dass** die Oberseite der Drehmittelbasis (28) sich zumindest teilweise unterhalb des Auflagetisches (2) erstreckt

9. Kapp- und Gehrungssäge nach einem der vorstehenden Ansprüche, **dadurch gekennzeichnet, dass** die Federelemente (38) aus einem Kunststoff- oder Blechmaterial hergestellt sind.

## Claims

1. Docking and miter saw (1) having a seating table (2), having a rotary means (4) that is rotatable about a vertical axis (H) relative to the seating table (2), having a miter arm (6) that is pivotable, in particular, about the vertical axis (H), having a sawing device (7) disposed on the miter arm (6), the sawing device (7) being disposed above the seating table (2) such that it can be moved up and down, preferably in a pivoting manner, the rotary means (4) having a rotary means base (28) that has a receiver (29) and an inset (30) disposed in the receiver (29), the inset (30) preferably delimiting a saw slot (31), at least partially, **characterized in that** the inset (30) and/or the receiver (29) is or are realized in such a way that the inset (30) - relative to the seating table (2) and/or relative to the rotary means base (28) - can be disposed in a height adjustable manner and/or the alignment of the inset (30) can be set in respect of height, **in that** a plurality of adjusting means (36) are provided for the height adjustment, or alignment, of the inset (30) and the respective adjusting means (36) has an adjusting screw (37), the respective adjusting screw (37) operatively connecting the rotary means base (28) and the inset (30) to one another, the inset (30) being realized in multiple parts, to be specific having a fastening plate (39) and a workpiece seating structure (40) disposed above the fastening plate (39), **in that** the adjusting screws (37) act upon the fastening plate (39) and engage in threaded openings provided on the bottom of the receiver (29), and **in that** the workpiece seating structure (40) has a corresponding number of adjusting screw openings (42), which are disposed above the adjusting screws (37).

2. Docking and miter saw according to the preceding claim, **characterized in that** the adjusting means (36) has a spring element (38).

3. Docking and miter saw according to either one of the preceding claims, **characterized in that** the spring element (38) is disposed between the rotary means base (28) and the inset (30).

4. Docking and miter saw according to any one of the preceding claims, **characterized in that** the spring element (38) is realized in the form of a ring, and encircles the adjusting means (36), in particular the adjusting screw (37).

5. Docking and miter saw according to any one of the preceding claims, **characterized in that** the rotary means (4) has a bracket (27) and preferably a rotary disk (27a), the inset (30) extending along the bracket (27) together with the receiver (29).

6. Docking and miter saw according to any one of the preceding claims, **characterized in that** the inset (30), in particular the workpiece seating structure (40), constitutes a partially cylindrical bearing projection (32) in the region of the vertical axis (H), and the seating table (2) has an at least partially cylindrical opening (33), the bearing projection (32) engaging in the opening (33) in a fitting manner.

7. Docking and miter saw according to any one of the preceding claims, **characterized in that** the rotary means (4) is covered, at least partially, by the seating table (2).

8. Docking and miter saw according to any one of the preceding claims, **characterized in that** the top side of the rotary means base (28) extends, at least partially, below the seating table (2).

9. Docking and miter saw according to any one of the preceding claims, **characterized in that** the spring elements (38) are produced from a plastic or sheet metal material.

## Revendications

1. Scie pendulaire à onglet (1) comprenant une table d'appui (2) avec un moyen rotatif (4) pouvant tourner autour d'un axe vertical (H) par rapport à la table d'appui (2), un bras d'onglet (6) pouvant notamment pivoter autour de l'axe vertical (H), un dispositif de sciage (7) disposé sur le bras d'onglet (6), le dispositif de sciage (7) étant disposé au-dessus de la table d'appui (2) de manière à pouvoir être déplacé de haut en bas, de préférence par pivotement, le moyen rotatif (4) présentant une base de moyen rotatif (28) avec un logement (29) et une garniture (30) disposée dans le logement (29), la garniture (30) limitant de préférence au moins en partie une fente de sciage (31), **caractérisée en ce que** la garniture (30) et/ou le logement (29) sont réalisés de telle sorte que la garniture (30) puisse être disposée, par rapport à la table d'appui (2) et/ou par rapport à la base de moyen rotatif (28), de manière réglable en hauteur et/ou que l'orientation en hauteur de la garniture (30) puisse être ajustée, **en ce que** plusieurs moyens de réglage (36) pour le réglage en hauteur ou l'orientation de la garniture (30) sont prévus et le moyen de réglage respectif (36) présente une vis de réglage (37), la vis de réglage respective (37) reliant fonctionnellement l'une à l'autre la base de moyen rotatif (28) et la garniture (30), la garniture (30) étant réalisée en plusieurs parties, à savoir une plaque de fixation (39) et une structure de support de pièces (40) disposée au-dessus de la plaque de fixation (39), **en ce que** les vis de réglage (37) viennent en prise avec la plaque de fixation (39) et viennent en prise dans des ouvertures filetées au fond du logement (29), et **en ce que** la structure de support de pièces (40) présente un nombre correspondant d'ouvertures de vis de réglage (42) qui sont disposées au-dessus des vis de réglage (37).

2. Scie pendulaire à onglet selon la revendication précédente, **caractérisée en ce que** le moyen de réglage (36) présente un élément de ressort (38).

3. Scie pendulaire à onglet selon l'une quelconque des revendications précédentes, **caractérisée en ce que** l'élément de ressort (38) est disposé entre la base de moyen rotatif (28) et la garniture (30).

4. Scie pendulaire à onglet selon l'une quelconque des revendications précédentes, **caractérisée en ce que** l'élément de ressort (38) est réalisé sous forme annulaire et entoure le moyen de réglage (36), en particulier la vis de réglage (37).

5. Scie pendulaire à onglet selon l'une quelconque des revendications précédentes, **caractérisée en ce que** le moyen rotatif (4) présente un bras en porte-à-faux (27) et de préférence un plateau tournant (27a), la garniture (30) s'étendant le long du bras en porte-à-faux (27) conjointement avec le logement (29).

6. Scie pendulaire à onglet selon l'une quelconque des revendications précédentes, **caractérisée en ce que** la garniture (30), en particulier la structure de support de pièces (40), forme dans la région de l'axe vertical (H) une saillie de palier partiellement cylindrique (32) et la table d'appui (2) présente une ouverture au moins partiellement cylindrique (33), la saillie de palier (32) s'engageant de manière adaptée dans l'ouverture (33).

7. Scie pendulaire à onglet selon l'une quelconque des revendications précédentes, **caractérisée en ce que** le moyen rotatif (4) est recouvert au moins en partie par la table d'appui (2).

8. Scie pendulaire à onglet selon l'une quelconque des revendications précédentes, **caractérisée en ce que** le côté supérieur de la base de moyen rotatif (28) s'étend au moins en partie en dessous de la table d'appui (2).

9. Scie pendulaire à onglet selon l'une quelconque des revendications précédentes, **caractérisée en ce que** les éléments de ressorts (38) sont fabriqués en un matériau en plastique ou en tôle.
